(19) Europäisches Patentamt
European Patent Office
Office européen des brevets

(11) **EP 4 596 636 A1**

(12) **EUROPEAN PATENT APPLICATION**
published in accordance with Art. 153(4) EPC

(43) Date of publication:
**06.08.2025 Bulletin 2025/32**

(21) Application number: **23872433.0**

(22) Date of filing: **27.09.2023**

(51) International Patent Classification (IPC):
***C08L 101/00*** *(2006.01)* ***B32B 15/082*** *(2006.01)*
***B32B 15/20*** *(2006.01)* ***B32B 27/30*** *(2006.01)*
***C08L 27/12*** *(2006.01)* ***C08L 67/00*** *(2006.01)*

(52) Cooperative Patent Classification (CPC):
**B32B 15/08; B32B 15/082; B32B 15/20; B32B 27/30; C08F 8/30; C08G 81/02; C08L 27/12; C08L 27/18; C08L 27/22; C08L 67/00; C08L 101/00; C08L 101/02**

(86) International application number:
**PCT/JP2023/035179**

(87) International publication number:
**WO 2024/071211 (04.04.2024 Gazette 2024/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.09.2022 JP 2022155426**

(71) Applicants:
- **National University Corporation Yamagata University**
  **Yamagata-shi, Yamagata 990-8560 (JP)**
- **DAIKIN INDUSTRIES, LTD.**
  **Osaka-shi, Osaka 530-0001 (JP)**

(72) Inventors:
- **TAKAHASHI, Tatsuhiro**
  **Yonezawa-shi, Yamagata 992-8510 (JP)**
- **NUKUI, Takuya**
  **Yonezawa-shi, Yamagata 992-8510 (JP)**
- **TOMIZAWA, Yuma**
  **Yonezawa-shi, Yamagata 992-8510 (JP)**
- **YAMAGUCHI, Shuhei**
  **Osaka-Shi, Osaka 530-0001 (JP)**
- **FUKUSHIMA, Toshiyuki**
  **Osaka-Shi, Osaka 530-0001 (JP)**
- **SEKI, Toyomitsu**
  **Osaka-Shi, Osaka 530-0001 (JP)**
- **KOMORI, Masaji**
  **Osaka-Shi, Osaka 530-0001 (JP)**
- **OKANISHI, Ken**
  **Osaka-Shi, Osaka 530-0001 (JP)**
- **YAMAUCHI, Akiyoshi**
  **Osaka-Shi, Osaka 530-0001 (JP)**

(74) Representative: **Hoffmann Eitle**
**Patent- und Rechtsanwälte PartmbB**
**Arabellastraße 30**
**81925 München (DE)**

# (54) COMPOSITION, MOLDED BODY, LAMINATE, AND RESIN

(57) The disclosure aims to provide a composition capable of suppressing fluororesin agglomeration, which may lead to strands with a poor appearance, even when the proportion of the fluororesin is increased, and also aims to provide a molded article, a laminate, and a resin. The disclosure relates to a composition containing: a fluororesin A; and a resin B other than the fluororesin A, the resin B having a melt flow rate of 30 g/10 min or higher at a melting point + 12°C, at least one of the fluororesin A or the resin B containing a group (I) represented by the following formula:

[Chem. 1]

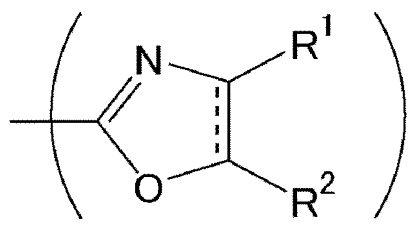

wherein $R^1$ and $R^2$ are the same as or different from each other, are each hydrogen or an organic group, and optionally bond to each other to form a ring structure; and a



EP 4 596 636 A1

double line composed of a solid line and a dotted line represents a single bond or a double bond.

## Description

TECHNICAL FIELD

The disclosure relates to compositions, molded articles, laminates, and resins.

BACKGROUND ART

Various studies have been conducted on compositions containing fluororesins and liquid crystal polymers (see, for example, Patent Literatures 1 to 3).

CITATION LIST

- Patent Literature

Patent Literature 1: JP 2001-187833 A
Patent Literature 2: JP 2018-177931 A
Patent Literature 3: JP 2019-065061 A

SUMMARY OF INVENTION

- Technical Problem

The inventors conducted investigations and found that increasing the proportion of the fluororesin, as in the examples of Patent Literatures 2 and 3, reduces the compatibility between the liquid crystal polymer and the fluororesin, making the fluororesin more susceptible to agglomeration (poor dispersion). Fluororesin agglomeration, which leads to strands with a poor appearance, is preferably avoided as much as possible.
The disclosure aims to provide a composition capable of suppressing fluororesin agglomeration, which may lead to strands with a poor appearance, even when the proportion of the fluororesin is increased, and also aims to provide a molded article, a laminate, and a resin.

- Solution to Problem

The disclosure (1) relates to a composition containing: a fluororesin A; and a resin B other than the fluororesin A (hereinafter, also referred to as a "composition of the disclosure"), the resin B having a melt flow rate of 30 g/10 min or higher at a melting point + 12°C, at least one of the fluororesin A or the resin B containing a group (I) represented by the following formula:

[Chem. 1]

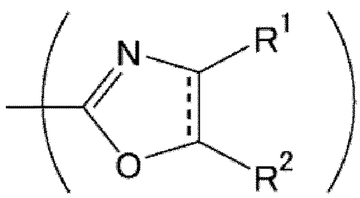

wherein $R^1$ and $R^2$ are the same as or different from each other, are each hydrogen or an organic group, and optionally bond to each other to form a ring structure; and a double line composed of a solid line and a dotted line represents a single bond or a double bond.
The disclosure (2) relates to the composition according to the disclosure (1), wherein at least one of the fluororesin A or the resin B has a thermal decomposition temperature of 330°C or higher.
The disclosure (3) relates to the composition according to the disclosure (1) or (2), wherein the fluororesin A includes at least one selected from the group consisting of polytetrafluoroethylene, a tetrafluoroethylene/perfluoro(alkyl vinyl ether) copolymer, and a tetrafluoroethylene/hexafluoropropylene copolymer.
The disclosure (4) relates to the composition according to any one of the disclosures (1) to (3), wherein the resin B

includes at least one selected from the group consisting of a liquid crystal polymer, polyetherimide, polyphenylene sulfide, polyaryl ether ketone, polysulfone, and polyethersulfone.

The disclosure (5) relates to the composition according to any one of the disclosures (1) to (4), wherein the fluororesin A is contained in an amount of 10% by volume or more.

The disclosure (6) relates to the composition according to any one of the disclosures (1) to (5), wherein the group (I) is an oxazoline group.

The disclosure (7) relates to the composition according to the disclosure (6), wherein the oxazoline group is derived from an oxazoline compound.

The disclosure (8) relates to a molded article containing the composition according to any one of the disclosures (1) to (7) (hereinafter, also referred to as a "molded article of the disclosure").

The disclosure (9) relates to the molded article according to the disclosure (8), which is intended to be used for a dielectric material.

The disclosure (10) relates to a laminate including: metal foil; and the molded article according to the disclosure (8) or (9) (hereinafter, also referred to as a "laminate of the disclosure").

The disclosure (11) relates to the laminate according to the disclosure (10), wherein the metal foil includes copper.

The disclosure (12) relates to a resin containing a group (I) represented by the following formula and having a thermal decomposition temperature of 330°C or higher (hereinafter, also referred to as a "resin of the disclosure") :

[Chem. 2]

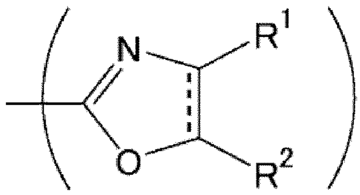

wherein $R^1$ and $R^2$ are the same as or different from each other, are each hydrogen or an organic group, and optionally bond to each other to form a ring structure; and a double line composed of a solid line and a dotted line represents a single bond or a double bond.

The disclosure (13) relates to the resin according to the disclosure (12), further containing an amide group and an ester group.

The disclosure (14) relates to the resin according to the disclosure (12) or (13), wherein the group (I) is an oxazoline group.

The disclosure (15) relates to the resin according to the disclosure (14), wherein the oxazoline group is derived from an oxazoline compound.

The disclosure (16) relates to the resin according to any one of the disclosures (12) to (15), wherein the resin has a melt flow rate of 30 g/10 min or higher at a melting point + 12°C.

The disclosure (17) relates to the resin according to the disclosure (16), wherein the resin is a liquid crystal polymer, polyetherimide, polyphenylene sulfide, polyaryl ether ketone, polysulfone, or polyethersulfone.

The disclosure (18) relates to the resin according to any one of the disclosures (12) to (15), wherein the resin is a fluororesin.

The disclosure (19) relates to the resin according to the disclosure (18), wherein the fluororesin includes at least one selected from the group consisting of polytetrafluoroethylene, a tetrafluoroethylene/perfluoro(alkyl vinyl ether) copolymer, and a tetrafluoroethylene/hexafluoropropylene copolymer.

The disclosure (20) relates to the resin according to the disclosure (18) or (19), wherein the fluororesin is insoluble in an aprotic solvent.

The disclosure (21) relates to the resin according to the disclosure (20), wherein the aprotic solvent includes at least one selected from the group consisting of a perfluorinated aromatic compound, a perfluorinated trialkylamine, a perfluorinated alkane, a hydrofluorocarbon, a perfluorinated cyclic ether, a hydrofluoroether, and an olefin compound containing at least one chlorine atom.

The disclosure (22) relates to the resin according to any one of the disclosures (12) to (21), wherein the resin is a resin modifier.

- Advantageous Effects of Invention

The disclosure provides a composition capable of suppressing fluororesin agglomeration, which may lead to

strands with a poor appearance, even when the proportion of the fluororesin is increased, and also provides a molded article, a laminate, and a resin.

DESCRIPTION OF EMBODIMENTS

The "organic group" herein means a group containing one or more carbon atoms or a group formed by removing one hydrogen atom from an organic compound.

Examples of this "organic group" include

an alkyl group optionally containing one or more substituents,
an alkenyl group optionally containing one or more substituents,
an alkynyl group optionally containing one or more substituents,
a cycloalkyl group optionally containing one or more substituents,
a cycloalkenyl group optionally containing one or more substituents,
a cycloalkadienyl group optionally containing one or more substituents,
an aryl group optionally containing one or more substituents,
an aralkyl group optionally containing one or more substituents,
a non-aromatic heterocyclic group optionally containing one or more substituents,
a heteroaryl group optionally containing one or more substituents,
a cyano group,
a formyl group,
RaO-,
RaCO-,
$RaSO_2$-,
RaCOO-,
RaNRaCO-,
RaCONRa-,
RaOCO-,
$RaOSO_2$-, and
$RaNRbSO_2$-,
wherein Ras are each independently
an alkyl group optionally containing one or more substituents,
an alkenyl group optionally containing one or more substituents,
an alkynyl group optionally containing one or more substituents,
a cycloalkyl group optionally containing one or more substituents,
a cycloalkenyl group optionally containing one or more substituents,
a cycloalkadienyl group optionally containing one or more substituents,
an aryl group optionally containing one or more substituents,
an aralkyl group optionally containing one or more substituents,
a non-aromatic heterocyclic group optionally containing one or more substituents, or
a heteroaryl group optionally containing one or more substituents; and
Rbs are each independently H or an alkyl group optionally containing one or more substituents.

The organic group is preferably an alkyl group optionally containing one or more substituents.

The disclosure is described in detail below.

<Composition of the disclosure>

The composition of the disclosure contains a fluororesin A and a resin B other than the fluororesin A, the resin B having a melt flow rate (MFR) of 30 g/10 min or higher at a melting point + 12°C, at least one of the fluororesin A or the resin B containing a group (I) represented by the following formula:

[Chem. 3]

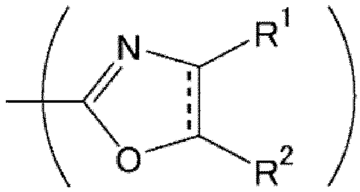

wherein $R^1$ and $R^2$ are the same as or different from each other, are each hydrogen or an organic group, and optionally bond to each other to form a ring structure; and a double line composed of a solid line and a dotted line represents a single bond or a double bond.

The composition of the disclosure containing the fluororesin A and the resin B, at least one of the fluororesin A or the resin B containing the group (I), can improve the compatibility between the fluororesin A and the resin B. As a result, even when the proportion of the fluororesin is increased, fluororesin agglomeration, which may lead to strands with a poor appearance, can be suppressed.

This effect is believed to be brought about by the bonding of the group (I) present in one of the resins with a functional group present in the other resin, such as a carboxy group, a phenolic OH group, or a thiol group. This effect is believed to be also exhibited when the bonding is covalent bonding or a non-covalent interaction such as hydrogen bonding.

In the composition of the disclosure, one or both of the fluororesin A and the resin B may contain the group (I). Preferably, at least the fluororesin A contains the group (I).

The group (I) may be introduced into an end, a side chain, or both an end and a side chain of a polymer of the fluororesin A or the resin B. Preferably, the group (I) is introduced into at least an end of a polymer of the fluororesin A or the resin B.

The polymer of the fluororesin A or the resin B may have a branched structure. When the polymer has a branched structure, the group (I) may be present in the main chain, a branched chain, or both the main chain and a branched chain. The group (I) is preferably present in at least the main chain, and is more preferably present at an end of the main chain.

The organic group for $R^1$ and $R^2$ is as defined above.

Examples of the ring structure formed by combining $R^1$ and $R^2$ include a cyclohexane ring and a benzene ring.

$R^1$ and $R^2$ are each preferably a hydrogen atom because it can react with a carboxy group, which is introduced into many resins, to form a stable amide ester bond, and the double line composed of a solid line and a dotted line preferably represents a single bond. In other words, the group (I) is preferably an oxazoline group.

Preferably, the oxazoline group is derived from an oxazoline compound. In other words, the oxazoline group is preferably introduced from the oxazoline group in the oxazoline compound.

The group (I) may be introduced into a resin by any method. Specifically, a compound containing the group (I) may be copolymerized during the polymerization for resin preparation; a side chain, an end, or the like of a resin not containing the group (I) prepared by polymerization may be modified with a compound containing the group (I); or a compound containing the group (I) may be grafted.

Furthermore, a resin (polymer) having the group (I) may be further reacted with a different compound.

The compound containing the group (I), such as an oxazoline compound, may be a polymer, an oligomer, or a low molecular weight compound other than these.

The low molecular weight compound containing the group (I) is preferably a compound containing a benzene ring or a naphthalene ring.

In the low molecular weight compound containing the group (I), the number of the groups (I) is one or more, preferably two or more. There is no upper limit on the number. The position of the group (I) may be appropriately determined depending on the number of the groups (I) and the structure of the compound.

The polymer or oligomer containing the group (I) may have any structure and may or may not contain a benzene ring or a naphthalene ring.

In the polymer or oligomer containing the group (I), the number of the groups (I) is one or more, preferably more than one (two or more). There is no upper limit on the number of the groups (I). The position of the group (I) is also not limited.

The polymer containing the group (I) preferably has a weight average molecular weight (Mw) of 10000 to 500000 and a number average molecular weight (Mn) of 5000 to 200000.

The Mw and Mn can be determined based on the polystyrene equivalent weight average molecular weight measured by GPC.

Specific examples of the compound containing the group (I) include: low molecular weight oxazoline compounds such as 2-vinyl-2-oxazoline, 4-methyl-2-vinyl-2-oxazoline, 5-methyl-2-vinyl-2-oxazoline, 4-ethyl-2-vinyl-2-oxazoline, 5-ethyl-2-vinyl-2-oxazoline, 4,4-dimethyl-2-vinyl-2-oxazoline, 4,4-diethyl-2-vinyl-2-oxazoline, 4,5-dimethyl-2-vinyl-2-oxazoline, 4,5-diethyl-2-vinyl-2-oxazoline, 2-isopropenyl-2-oxazoline, 4-methyl-2-isopropenyl-2-oxazoline, 5-methyl-2-isopropenyl-2-oxazoline, 4-ethyl-2-isopropenyl-2-oxazoline, 5-ethyl-2-isopropenyl-2-oxazoline, 4,4-dimethyl-2-isopropenyl-2-oxazoline, 4,4-diethyl-2-isopropenyl-2-oxazoline, 4,5-dimethyl-2-isopropenyl-2-oxazoline, 4,5-diethyl-2-isopropenyl-2-oxazoline, 1,3-phenylbisoxazoline (1,3-PBO), and 1,4-phenylbisoxazoline (1,4-PBO); and polymer oxazoline compounds such as poly-2-vinyl-2-oxazoline (Pvozo) and EPOCROS (registered trademark) available from Nippon Shokubai Co., Ltd. Of these, 1,3-PBO and Pvozo are preferred, and 1,3-PBO is more preferred.

In addition to the oxazoline compounds, a specific example of the compound containing the group (I) is 1,4-bis(benzoxazol-2-yl)naphthalene (1,4-BBN).

Examples of the fluororesin A include polytetrafluoroethylene (PTFE), a tetrafluoroethylene (TFE)/perfluoro(alkyl vinyl ether) (PAVE) copolymer (PFA), a TFE/hexafluoropropylene (HFP) copolymer (FEP), an ethylene (Et)/TFE copolymer (ETFE), an Et/TFE/HFP copolymer (EFEP), polychlorotrifluoroethylene (PCTFE), a chlorotrifluoroethylene (CTFE)/TFE copolymer, a CTFE/TFE/PAVE copolymer, and an Et/CTFE copolymer.

From the viewpoint of compatibility with the resin B, the fluororesin A preferably includes at least one selected from the group consisting of polytetrafluoroethylene (PTFE), a tetrafluoroethylene (TFE)/perfluoro(alkyl vinyl ether) (PAVE) copolymer (PFA), and a tetrafluoroethylene (TFE)/hexafluoropropylene (HFP) copolymer (FEP), and more preferably includes at least one selected from the group consisting of PFA and FEP, with FEP being still more preferred.

The PTFE may be a TFE homopolymer consisting only of a tetrafluoroethylene (TFE) unit, or may be a modified PTFE containing a TFE unit and a modifying monomer unit based on a modifying monomer copolymerizable with TFE.

The PTFE may be a TFE homopolymer consisting only of a tetrafluoroethylene (TFE) unit, or may be a modified PTFE containing a TFE unit and a modifying monomer unit based on a modifying monomer copolymerizable with TFE.

The modifying monomer may be any monomer copolymerizable with TFE, and examples thereof include a perfluoroolefin such as hexafluoropropylene (HFP); a chlorofluoroolefin such as chlorotrifluoroethylene (CTFE); a hydrogen-containing fluoroolefin such as trifluoroethylene and vinylidene fluoride (VdF); a perfluorovinyl ether; a perfluoroalkyl allyl ether; a (perfluoroalkyl)ethylene; and ethylene. One modifying monomer or multiple modifying monomers may be used.

Examples of the perfluorovinyl ether include, but are not limited to, unsaturated perfluoro compounds represented by the following formula (1):

$$CF_2\text{=}CF\text{-}ORf \qquad (1)$$

wherein Rf is a perfluoroorganic group. The "perfluoroorganic group" herein means an organic group in which all hydrogen atoms bonded to any carbon atom are replaced by fluorine atoms. The perfluoroorganic group may contain ether oxygen.

An example of the perfluorovinyl ether is a perfluoro(alkyl vinyl ether) (PAVE) represented by the formula (1) wherein Rf is a C1-C10 perfluoroalkyl group. The perfluoroalkyl group preferably has 1 to 5 carbon atoms.

Examples of the perfluoroalkyl group in the PAVE include a perfluoromethyl group, a perfluoroethyl group, a perfluoropropyl group, a perfluorobutyl group, a perfluoropentyl group, and a perfluorohexyl group. Preferred is perfluoro(propyl vinyl ether) (PPVE) in which the perfluoroalkyl group is a perfluoropropyl group.

Examples of the perfluorovinyl ether include: those represented by the formula (1) wherein Rf is a C4-C9 perfluoro(alkoxyalkyl) group; those represented by the formula (1) wherein Rf is a group represented by the following formula:

[Chem. 4]

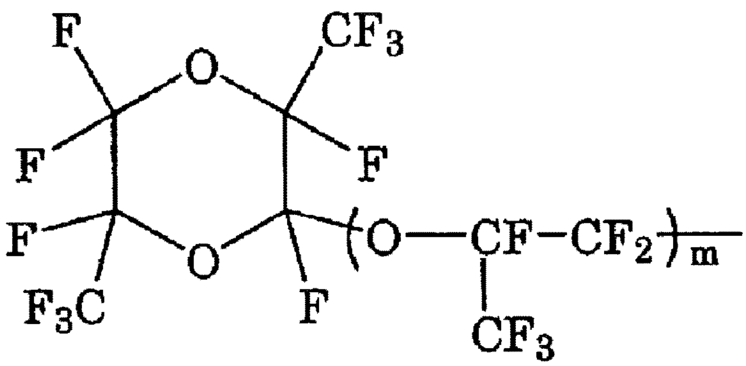

(wherein m is 0 or an integer of 1 to 4), and those represented by the formula (1) wherein Rf is a group represented by the following formula:

[Chem. 5]

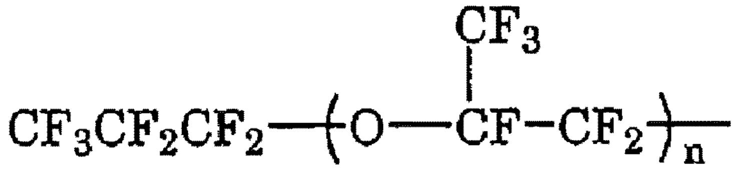

(wherein n is an integer of 1 to 4.).

Examples of the (perfluoroalkyl)ethylene include, but are not limited to, (perfluorobutyl)ethylene (PFBE), (perfluorohexyl)ethylene (PFHE), and (perfluorooctyl)ethylene.

The modifying monomer in the modified PTFE preferably includes at least one selected from the group consisting of HFP, CTFE, VdF, PPVE, PFBE, and ethylene, and more preferably includes at least one selected from the group consisting of HFP and CTFE.

In the modified PTFE, the amount of the modifying monomer unit is preferably in the range of 0.00001 to 1.0% by mass. The lower limit of the amount of the modifying monomer unit is more preferably 0.0001% by mass, still more preferably 0.001% by mass, even more preferably 0.005% by mass, further preferably 0.010% by mass, particularly preferably 0.030% by mass. The upper limit of the amount of the modifying monomer unit is preferably 0.90% by mass, more preferably 0.50% by mass, still more preferably 0.40% by mass, even more preferably 0.30% by mass.

The modifying monomer unit herein means a moiety that is part of the molecular structure of modified PTFE and is derived from a modifying monomer.

The PTFE preferably has a melting point of 324°C to 360°C. The melting point of PTFE means the first melting point. The first melting point is the temperature corresponding to the maximum value on a heat-of-fusion curve obtained by heating a PTFE that has no history of being heated up to a temperature of 300°C or higher, at a rate of 10°C/min using a differential scanning calorimeter (DSC) .

The PTFE preferably has a standard specific gravity (SSG) of 2.130 to 2.280. The specific gravity is more preferably 2.220 or lower, still more preferably 2.200 or lower, while preferably 2.140 or higher, more preferably 2.150 or higher. The SSG is measured by a water displacement method in conformity with ASTM D-792 using a sample molded in conformity with ASTM D 4895-89.

The PTFE preferably has non-melt secondary processibility. The non-melt secondary processibility means a property of a polymer such that the melt flow rate cannot be measured at a temperature higher than the crystallization melting point in conformity with ASTM D-1238 and D-2116.

The PFA is preferably, but is not limited to, a copolymer in which the mole ratio of the TFE unit to the PAVE unit ((TFE unit)/(PAVE unit)) is 70/30 or higher and lower than 99/1. The mole ratio is more preferably 70/30 or higher and 98.9/1.1 or lower, still more preferably 80/20 or higher and 98.9/1.1 or lower. The PFA is preferably a copolymer containing a monomer unit derived from a monomer copolymerizable with TFE and PAVE in an amount of 0.1 to 10 mol% (the sum of the TFE unit and the PAVE unit is 90 to 99.9 mol%), more preferably 0.1 to 5 mol%, particularly preferably 0.2 to 4 mol%.

Examples of the monomer copolymerizable with TFE and PAVE include HFP, a vinyl monomer represented by the formula (I): $CZ^1Z^2{=}CZ^3(CF_2)Z^4$ (wherein $Z^1$, $Z^2$, and $Z^3$ are the same as or different from each other and each are a hydrogen atom or a fluorine atom; $Z^4$ is a hydrogen atom, a fluorine atom, or a chlorine atom; and n is an integer of 2 to 10), an alkyl perfluorovinyl ether derivative represented by the formula (II): $CF_2{=}CF\text{-}OCH_2\text{-}Rf^1$ (wherein $Rf^1$ is a C1-C5 perfluoroalkyl group), and an allyl ether monomer represented by the formula (X): $CZ^5Z^6{=}CZ^7\text{-}CZ^8Z^9\text{-}O\text{-}Rf^4$ (wherein $Z^5$, $Z^6$, and $Z^7$ are the same as or different from each other and each represent a hydrogen atom, a chlorine atom, or a fluorine atom; $Z^8$ and $Z^9$ each are a hydrogen atom or a fluorine atom; and $Rf^4$ is a C1-C5 perfluoroalkyl group). Preferred examples of the allyl ether monomer include $CH_2{=}CFCF_2\text{-}O\text{-}Rf^4$, $CF_2{=}CFCF_2\text{-}O\text{-}Rf^4$ (perfluoroalkyl allyl ether), $CF_2{=}CFCH_2\text{-}O\text{-}Rf^4$, and $CH_2{=}CHCF_2\text{-}O\text{-}Rf^4$ (wherein $Rf^4$ is the same as that in the formula (X)).

Examples of the monomer copolymerizable with TFE and PAVE further include unsaturated monocarboxylic acids, unsaturated dicarboxylic acids, and acid anhydrides of unsaturated dicarboxylic acids, such as itaconic acid, itaconic anhydride, citraconic anhydride, and 5-norbornene-2,3-dicarboxylic anhydride.

The PFA preferably has a melting point of 180°C to 324°C, more preferably 230°C to 320°C, still more preferably 280°C to 320°C.

The FEP is preferably, but is not limited to, a copolymer in which the mole ratio of the TFE unit to the HFP unit ((TFE unit)/(HFP unit)) is 70/30 or higher and lower than 99/1. The mole ratio is more preferably 70/30 or higher and 98.9/1.1 or lower, still more preferably 80/20 or higher and 98.9/1.1 or lower. The FEP is preferably a copolymer containing a monomer unit derived from a monomer copolymerizable with TFE and HFP in an amount of 0.1 to 10 mol% (the sum of the TFE unit and the HFP unit is 90 to 99.9 mol%), more preferably 0.1 to 5 mol%, particularly preferably 0.2 to 4 mol%.

Examples of the monomer copolymerizable with TFE and HFP include PAVE, a monomer represented by the

formula (X), and an alkyl perfluorovinyl ether derivative represented by the formula (II). Examples of the monomer copolymerizable with TFE and HFP also include unsaturated monocarboxylic acids, unsaturated dicarboxylic acids, and acid anhydrides of unsaturated dicarboxylic acids, such as itaconic acid, itaconic anhydride, citraconic anhydride, and 5-norbornene-2,3-dicarboxylic anhydride.

The FEP preferably has a melting point of 150°C to 324°C, more preferably 200°C to 320°C, still more preferably 240°C to 320°C.

The ETFE is preferably a copolymer in which the mole ratio of the TFE unit to the ethylene unit ((TFE unit)/(ethylene unit)) is 20/80 or higher and 90/10 or lower. The mole ratio is more preferably 37/63 or higher and 85/15 or lower, still more preferably 38/62 or higher and 80/20 or lower. The ETFE may be a copolymer containing TFE, ethylene, and a monomer copolymerizable with TFE and ethylene. The ETFE is preferably a copolymer containing a monomer unit derived from a monomer copolymerizable with TFE and ethylene in an amount of 0.1 to 10 mol% (the sum of the TFE unit and the ethylene unit is 90 to 99.9 mol%), more preferably 0.1 to 5 mol%, particularly preferably 0.2 to 4 mol%.

Examples of the monomer copolymerizable with TFE and ethylene include monomers represented by any of the formulas: $CH_2=CX^1Rf^2$, $CF_2=CFRf^2$, $CF_2=CFORf^2$, and $CH_2=C(Rf^2)_2$ (wherein $X^1$ is a hydrogen atom or a fluorine atom; and $Rf^2$ is a fluoroalkyl group optionally containing an ether bond) and monomers represented by the formula (X). Preferred among these are fluorine-containing vinyl monomers represented by any of $CF_2=CFRf^2$, $CF_2=CFORf^2$, and $CH_2=CX^1Rf^2$ and monomers represented by the formula (X). More preferred are HFP, a perfluoro(alkyl vinyl ether) represented by $CF_2=CF\text{-}ORf^3$ (wherein $Rf^3$ is a C1-C5 perfluoroalkyl group), a perfluoro(alkyl allyl ether) represented by $CF_2=CF\text{-}CF_2\text{-}O\text{-}Rf^4$ (wherein $Rf^4$ is a C1-C5 perfluoroalkyl group), and a fluorine-containing vinyl monomer represented by $CH_2=CX^1Rf^2$ wherein $Rf^2$ is a C1-C8 fluoroalkyl group. Examples of the monomer copolymerizable with TFE and ethylene further include unsaturated monocarboxylic acids, unsaturated dicarboxylic acids, and acid anhydrides of unsaturated dicarboxylic acids, such as itaconic acid, itaconic anhydride, citraconic anhydride, and 5-norbornene-2,3-dicarboxylic anhydride.

The ETFE preferably has a melting point of 140°C to 324°C, more preferably 160°C to 320°C, still more preferably 195°C to 320°C.

The amounts of the respective monomer units in the polymer described above can be calculated by appropriate combination of NMR, FT-IR, elemental analysis, and X-ray fluorescence analysis in accordance with the types of the monomers.

The fluororesin A preferably has a thermal decomposition temperature of 330°C or higher, more preferably 350°C or higher, still more preferably 370°C or higher, while preferably 500°C or lower, more preferably 480°C or lower, still more preferably 470°C or lower.

The thermal decomposition temperature of the fluororesin A was determined using a thermal analyzer STA 7200 available from Hitachi High-Tech Corp. The measurement was performed in a nitrogen purge atmosphere at 200 mL/min. A sample in an amount of 10 mg was placed in an aluminum pan and maintained at 25°C for 10 minutes, and the temperature was increased to 600°C at a rate of 10°C/min. The temperature at which 5% of the initial mass was lost (Td5) was defined as the thermal decomposition temperature.

The fluororesin A may contain 100 to 2000 unstable end groups per $10^6$ main chain carbon atoms. The unstable end groups include -COF and -COOH. The number of unstable end groups is the total number of these groups.

The number of unstable end groups can be determined by infrared spectroscopy. Specifically, first, the fluororesin A is melt-extruded to produce a film having a thickness of 0.25 to 0.3 mm. This film is analyzed by Fourier transform infrared spectroscopy, so that an infrared absorption spectrum of the fluororesin A is obtained. This spectrum is then compared with a base spectrum of a polymer that is completely fluorinated and thus contains no unstable end group. Thereby, a difference spectrum is obtained. Based on the absorption peak of a specific unstable end group in the difference spectrum, the number N of unstable end groups per $10^6$ carbon atoms in the fluororesin A is calculated by the following formula (A):

$$N = I \times K/t \quad (A)$$

wherein I: absorbance;
K: correction coefficient; and
t: film thickness (mm).

The composition of the disclosure preferably forms a sea-island structure in which the resin B defines a sea component and the fluororesin A defines an island component.

The resin B may be any one having a melt flow rate (MFR) of 30 g/10 min or higher at a melting point + 12°C, and examples of the resin B that can be used include a liquid crystal polymer, polyetherimide, polyphenylene sulfide, polyaryl ether ketone, polysulfone, and polyethersulfone. The resin B preferably includes at least one selected from the group

consisting of a liquid crystal polymer, polyetherimide, polyphenylene sulfide, polyaryl ether ketone, polysulfone, and polyethersulfone, and more preferably includes at least one selected from the group consisting of a liquid crystal polymer, polyetherimide, polyphenylene sulfide, polyetherether ketone, polysulfone, and polyethersulfone, with a liquid crystal polymer being particularly preferred.

The liquid crystal polymer may be, but is not limited to, a polymer having a liquid crystallization temperature (i.e., melting point) of 180°C to 380°C, and is preferably a thermotropic liquid crystal polymer that becomes a liquid crystal such as a nematic crystal when heated.

Examples of the liquid crystal polymer include: a type I liquid crystal polymer (a biphenol/benzoic acid/paraoxybenzoic acid (POB) copolymer, etc.);

a type II liquid crystal polymer (a hydroxynaphthoic acid (HNA)/POB copolymer, etc.); and
a type III liquid crystal polymer (a POB/ethylene terephthalate copolymer, etc.).

Of these, from the viewpoints of kneading temperature and liquid-crystal transition temperature, at least one selected from the group consisting of a type I liquid crystal polymer and a type II liquid crystal polymer is preferred, and a type II liquid crystal polymer is more preferred.

The liquid crystal polymer preferably has a melting point of 280°C or higher, more preferably 310°C or higher, while preferably 380°C or lower, more preferably 350°C or lower.

The polyetherimide may be, for example, one having an imide bond and an ether bond in the molecule.

The polyetherimide preferably has a glass transition temperature of 180°C or higher, more preferably 200°C or higher, while preferably 300°C or lower, more preferably 280°C or lower.

The polyphenylene sulfide may be, for example, a resin having a structural unit represented by the following formula. The percentage of the structural unit is preferably 70 mol% or higher.

-(Ph-S)-

In the formula, Ph is a phenylene group, and examples of the phenylene group include p-phenylene, m-phenylene, o-phenylene, an alkyl-substituted phenylene, a phenyl-substituted phenylene, a halogen-substituted phenylene, an amino-substituted phenylene, an amido-substituted phenylene, p,p'-diphenylene sulfone, p,p'-biphenylene, and p,p'-biphenylene ether. Of these, p-phenylene is preferred.

The polyphenylene sulfide preferably has a melting point of 240°C or higher, more preferably 270°C or higher, while preferably 380°C or lower, more preferably 350°C or lower.

Examples of the polyaryl ether ketone include polyetherketone (PEK), polyetheretherketone (PEEK), and polyetherketoneketone (PEKK). Of these, PEEK is preferred.

The polyaryletherketone preferably has a melting point of 320°C or higher, more preferably 340°C or higher, while preferably 400°C or lower, more preferably 380°C or lower.

The polysulfone may be any commonly used polysulfone.

The polysulfone preferably has a glass transition temperature of 180°C or higher, more preferably 200°C or higher, still more preferably 220°C or higher, while preferably 300°C or lower, more preferably 280°C or lower, still more preferably 260°C or lower.

The polyethersulfone may be any commonly used polyethersulfone.

The polyethersulfone preferably has a glass transition temperature of 180°C or higher, more preferably 200°C or higher, still more preferably 220°C or higher, while preferably 300°C or lower, more preferably 280°C or lower, still more preferably 260°C or lower.

The melting points of liquid crystal polymer, polyetherimide, polyphenylene sulfide, and polyaryletherketone each correspond to the maximum value on a heat-of-fusion curve with a temperature-increasing rate of 10°C/min using a differential scanning calorimeter (DSC) .

The glass transition temperatures of polyetherimide, polysulfone, and polyethersulfone can be determined as follows. Specifically, using a differential scanning calorimeter (DSC822e, available from Mettler-Toledo International Inc.), 10 mg of a sample is heated at a rate of 10°C/min to give a DSC curve, and the temperature is read at the intermediate point of two intersections between each of the extension lines of the base lines before and after the secondary transition of the DSC curve and the tangent line at the inflection point of the DSC curve.

The MFR of the resin B at a melting point + 12°C is 30 g/10 min or higher, and is preferably 50 g/10 min or higher, more preferably 100 g/10 min or higher, while preferably 800 g/10 min or lower, more preferably 600 g/10 min or lower.

The MFR of the resin B is a value obtained in conformity with ASTM D1238 using a melt indexer (Yasuda Seiki Seisakusho Ltd.), as the mass (g/10 min) of a polymer flowing out of a nozzle (inner diameter: 2 mm, length: 8 mm) per 10 minutes at a load of 2.16 kg.

As in the case of the liquid crystal polymer and the like, the melting point of the resin B is the temperature

corresponding to the maximum value on a heat-of-fusion curve obtained by increasing the temperature at a rate of 10°C/min using a differential scanning calorimeter (DSC).

The resin B preferably has a thermal decomposition temperature of 330°C or higher, more preferably 350°C or higher, while preferably 600°C or lower, more preferably 550°C or lower.

The thermal decomposition temperature of the resin B was measured in the same manner as the thermal decomposition temperature of the fluororesin A, except that the measurement was performed in air instead of a nitrogen atmosphere.

The resin B preferably has a weight average molecular weight (Mw) of 10000 to 500000 and a number average molecular weight (Mn) of 5000 to 20000.

The Mw and Mn are determined by GPC as described above, except that the selection of a solvent for the measurement depends on the type of the resin B.

Preferably, the fluororesin A is insoluble in an aprotic solvent.

The phrase "insoluble in an aprotic solvent" means that when 10 mL of an aprotic solvent is added to 1 g of a sample at room temperature, in visual observation, the sample does not completely dissolve, and undissolved residue can be observed.

An example of the aprotic solvent is a fluorine-containing aprotic solvent. Examples of the fluorine-containing aprotic solvent includes a perfluorinated aromatic compound, a perfluorinated trialkylamine, a perfluorinated alkane, a hydrofluorocarbon, a perfluorinated cyclic ether, and a hydrofluoroether. The aprotic solvent may also be an olefinic compound containing at least one chlorine atom. In particular, hydrofluoroether (HFE) is preferred.

Examples of the fluororesin A that is insoluble in an aprotic solvent include FEP, PFA, PTFE, and ETFE.

Preferably, the fluororesin A and/or the fluororesin B contains an amide group and an ester group. A resin containing an amide group and an ester group can be obtained, for example, by reacting an oxazoline compound with a resin containing a carboxy group. Specifically, an amide group and an ester group are formed by reacting an oxazoline group in the oxazoline compound with a carboxy group in the resin.

The presence or absence of an amide group and an ester group can be confirmed by FT-IR analysis.

In the composition of the disclosure, the fluororesin A is preferably contained in an amount of 10% by volume or more, more preferably 20% by volume or more, still more preferably 30% by volume or more, while preferably 45% by volume or less, more preferably 40% by volume or less, still more preferably 35% by volume or less.

In the composition of the disclosure, the resin B is preferably contained in an amount of 55% by volume or more, more preferably 60% by volume or more, still more preferably 65% by volume or more, while preferably 90% by volume or less, more preferably 80% by volume or less, still more preferably 70% by volume or less.

In the composition of the disclosure, the total amount of the fluororesin A and the resin B is preferably 70% by volume or more, more preferably 80% by volume or more, still more preferably 90% by volume or more. The upper limit of the total amount is not limited, and the total amount may be 100% by volume.

In the composition of the disclosure, the volume ratio of the fluororesin A to the resin B (fluororesin A/resin B) is preferably 10/90 or more, more preferably 20/80 or more, still more preferably 30/70 or more, while preferably 45/55 or less, more preferably 40/60 or less, still more preferably 30/70 or less.

The composition of the disclosure may further contain an additive.

Examples of the additive that can be used include an epoxy compound, an amine compound, an oxazoline compound, and an acid anhydride. Of these, an oxazoline compound is preferred. The oxazoline compounds mentioned above can be used.

A filler can also be used as an additive. Specific examples of the filler include inorganic compounds such as silica-class compounds (specifically, e.g., crystalline silica, fused silica, spherical fused silica), titanium oxide, zirconium oxide, zinc oxide, tin oxide, silicon nitride, silicon carbide, boron nitride, calcium carbonate, calcium silicate, potassium titanate, aluminum nitride, indium oxide, alumina, antimony oxide, cerium oxide, magnesium oxide, iron oxide, and tin-doped indium oxide (ITO); minerals such as montmorillonite, talc, mica, boehmite, kaolin, smectite, zonolite, vermiculite, and sericite; carbon compounds such as carbon black, acetylene black, ketjen black, and carbon nanotube; metal hydroxides such as aluminum hydroxide and magnesium hydroxide; and glasses such as glass beads, glass flakes, and glass balloons.

In addition to the additives described above, an additive commonly used in resins may be used, such as a cross-linking agent, an antistatic agent, a heat-resistance stabilizer, a foaming agent, a foam nucleating agent, an antioxidant, a surfactant, a photopolymerization initiator, an anti-wear agent, or a surface modifier.

Furthermore, a resin other than the fluororesin A and the resin B may be used as the additive.

In the composition of the disclosure, the additive is preferably contained in an amount of 1% by volume or more, more preferably 1% by volume or more, still more preferably 3% by volume or more, while preferably 15% by volume or less, more preferably 10% by volume or less, still more preferably 8% by volume or less.

<Molded article of the disclosure>

The molded article of the disclosure contains the composition of the disclosure.

The molded article of the disclosure can be obtained by molding the composition of the disclosure. The molding may be performed by any common method such as injection molding, blow molding, inflation molding, or vacuum and pressure molding.

The molded article of the disclosure is suitably used as a dielectric material, in particular, a low dielectric substrate material (e.g., an insulating material).

The "low dielectric substrate material" herein refers to a material having a relative permittivity of 5.0 or lower at 25°C and 10 GHz and a dielectric loss tangent of 0.003 or less at 25°C and 10 GHz, more preferably a material having a relative permittivity of 4.0 or lower at 25°C and 10 GHz and a dielectric loss tangent of 0.002 or less at 25°C and 10 GHz, still more preferably a material having a relative permittivity of 3.5 or lower at 25°C and 10 GHz and a dielectric loss tangent of 0.0012 or less at 25°C and 10 GHz.

When the molded article of the disclosure is used as a dielectric material, its application is not limited. For example, the molded article can be used for a wide range of applications, including electrical and electronic components such as connectors, sockets, relay components, coil bobbins, optical pickups, oscillators, printed wiring boards, and computer-related components; semiconductor manufacturing process-related components such as IC trays and wafer carriers; home electrical product components such as VTRs, televisions, irons, air conditioners, stereos, vacuum cleaners, refrigerators, rice cookers, and lighting fixtures; lighting fixture components such as lamp reflectors and lamp holders; audio product components such as compact discs and speakers; communication device components such as ferrules for optical cables, telephone components, facsimile components, and modems; copier-related components such as separation claws and heater holders; mechanical components such as impellers, fans, toothed wheels, gears, bearings, motor components, and cases; automotive components such as automotive mechanism components, engine components, engine room components, electrical components, and interior components; cooking utensils such as microwave cooking pots and heat-resistant tableware; building materials and civil engineering materials such as heat insulation or soundproofing materials (e.g., flooring materials, wall materials), support materials (e.g., beams and pillars), and roofing materials; aircraft components; spacecraft components; space equipment components; radiation facility components such as nuclear reactors; marine facility components; cleaning tools; optical equipment components; valves; pipes; nozzles; filters; membranes; medical equipment components and medical materials; sensor parts; and sanitary equipment.

<Laminate of the disclosure>

The laminate of the disclosure includes a metal foil and the molded article of the disclosure.

Examples of the metal of the metal foil include aluminum, iron, silver, gold, and ruthenium. The metal may also be an alloy of these. Of these, copper is preferred. Examples of copper that can be used include rolled copper and electrolytic copper.

The laminate of the disclosure preferably has a thickness of 10 μm to 1000 μm. The molded article of the disclosure in the laminate of the disclosure preferably has a thickness of 1 μm to 100 μm.

The laminate and molded article of the disclosure are each preferably in the form of a sheet having a substantially uniform thickness. When each of these is uneven in thickness, the thickness is determined by measuring the thicknesses at 10 evenly spaced points in the longitudinal direction and averaging the resulting thicknesses.

The laminate of the disclosure may include a different layer in addition to the metal foil and the molded article of the disclosure.

The laminate of the disclosure is suitably used as a circuit board, in particular, a printed circuit board, a laminated circuit board (multilayer board), or a highfrequency circuit board.

The high frequency circuit board is a circuit board that is operable in a high frequency band. The high frequency band may be a band of 1 GHz or more, preferably a band of 3 GHz or more, more preferably a band of 5 GHz or more. The upper limit may be, but is not limited to, a band of 100 GHz or less.

<Resin of the disclosure>

The resin of the disclosure contains a group (I) represented by the following formula and having a thermal decomposition temperature of 330°C or higher:

[Chem. 6]

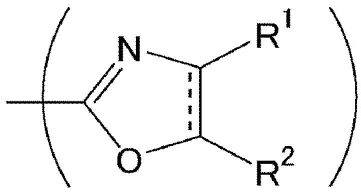

wherein $R^1$ and $R^2$ are the same as or different from each other, are each hydrogen or an organic group, and optionally bond to each other to form a ring structure; and a double line composed of a solid line and a dotted line represents a single bond or a double bond.

The resin of the disclosure is a novel resin and has excellent compatibility with a different resin.

The resin of the disclosure preferably contains at least the group (I) at an end (particularly an end of the main chain).

The resin of the disclosure may have a branched structure. When the resin of the disclosure has a branched structure, the group (I) may be present in the main chain, a branched chain, or both. The group (I) is preferably present in at least the main chain.

The group (I) is similar to that mentioned for the composition of the disclosure and preferred embodiments of the former are similar to those of the latter.

The resin of the disclosure is preferably a thermoplastic resin. Examples of the thermoplastic resin include those listed as the fluororesin A and the resin B in the composition of the disclosure.

The resin of the disclosure may be a crystalline resin or an amorphous resin.

Preferably, the resin of the disclosure is a fluororesin. The fluororesin is similar to the fluororesin A in the composition of the disclosure and preferred embodiments of the former are similar to those of the latter.

Preferably, the resin of the disclosure has a melt flow rate of 30 g/10 min or higher at a melting point + 12°C. The resin is similar to the resin B in the composition of the disclosure and preferred embodiments of the former are similar to those of the latter.

The thermal decomposition temperature of the resin of the disclosure is 330°C or higher, preferably 350°C or higher, more preferably 370°C or higher, while preferably 520°C or lower, more preferably 500°C or lower, still more preferably 480°C or lower.

The thermal decomposition temperature of the resin of the disclosure refers to that measured in the same manner as the thermal decomposition temperature of the fluororesin A when the resin of the disclosure corresponds to the fluororesin A, and refers to that measured in the same manner as the thermal decomposition temperature of the resin B when the resin of the disclosure corresponds to the resin B.

At least one of the liquid-crystal transition temperature (melting point) or the glass transition temperature of the resin of the disclosure is preferably 150°C or higher.

The liquid-crystal transition temperature (melting point) of the resin of the disclosure is preferably 150°C or higher, more preferably 200°C or higher, while preferably 450°C or lower, more preferably 400°C or lower, still more preferably 350°C or lower.

The glass transition temperature of the resin of the disclosure is preferably 150°C or higher, more preferably 180°C or higher, while preferably 300°C or lower, more preferably 270°C or lower, still more preferably 240°C or lower.

The liquid-crystal transition temperature (melting point) of the resin of the disclosure can be measured in the same manner as the melting point of the above-mentioned liquid crystal polymer and the like.

The glass transition temperature of the resin of the disclosure can be measured in the same manner as the glass transition temperature of the above-mentioned polyetherimide and the like.

The resin of the disclosure preferably has a weight average molecular weight (Mw) of 10000 to 500000 and a number average molecular weight (Mn) of 5000 to 20000.

The method for measuring Mw and Mn is as defined above.

Preferably, the resin of the disclosure is insoluble in an aprotic solvent.

The definition of the phrase "insoluble in an aprotic solvent" and the type of the aprotic solvent are the same as those mentioned for the composition of the disclosure.

When the resin of the disclosure is a fluororesin that is insoluble in an aprotic solvent, the fluororesin preferably has a melt viscosity of 5000 to 550000 poise at 372°C and a load of 5 kg.

The melt viscosity is calculated from the MFR value of the fluororesin A using the conversion equation (531700/MFR (g/10 min) = viscosity (poise)).

The MFR of the fluororesin A is measured in the same manner as the MFR of the resin B, except that the measurement temperature is 372°C and the load is 5 kg.

The resin of the disclosure can be used as a resin modifier. For example, the resin of the disclosure can be used as

a compatibilizer for resins, and is particularly suitable as a compatibilizer for enhancing the compatibility between fluororesins and resins having a melt flow rate of 30 g/10 min or higher at a melting point + 12°C.

When used as a resin modifier, the resin of the disclosure is usually mixed with a different resin and used in the form of a composition. The amount of the resin modifier in the disclosure used is preferably 1% by volume or more, more preferably 3% by volume or more, still more preferably 5% by volume or more, while preferably 45% by volume or less, more preferably 40% by volume or less, still more preferably 35% by volume or less, in 100% by volume of a mixture of the resin modifier and a different resin.

When used as a resin modifier, the resin of the disclosure may be used in combination with a different additive. The additive may be, for example, any of the additives such as fillers described for the composition of the disclosure.

It should be appreciated that a variety of modifications and changes in the structure and other details may be made to the aforementioned embodiments without departing from the spirit and scope of the claims.

## EXAMPLES

The disclosure will be described in more detail with reference to examples, but the disclosure is not limited only to these examples.

The materials used in the examples are as follows.

(Fluororesin A)

FEP (TFE unit/HFP unit (mole ratio) = 88.0/12.0, melting point: 260°C, solubility in aprotic solvent (HFE): none, an amide group and an ester group: absent)

PBO-modified FEP (thermal decomposition temperature: 430°C, solubility in aprotic solvent (HFE): none, an amide group and an ester group: present)

Pvozo-modified FEP (thermal decomposition temperature: 457°C, solubility in aprotic solvent (HFE): none, an amide group and an ester group: present)

PFA (TFE unit/PPVE unit (mole ratio) = 97.2/2.8, melting point: 301°C, solubility in aprotic solvent (HFE): none, an amide group and an ester group: absent)

Pvozo-modified PFA (thermal decomposition temperature: 473°C, solubility in aprotic solvent (HFE): none, an amide group and an ester group: present)

(Resin B)

LCP (type II liquid crystal polymer, MFR (melting point + 12°C): 206.5 g/10 min, thermal decomposition temperature: 513°C, liquid-crystal transition temperature (melting point): 313°C, an amide group and an ester group: absent)

Pvozo-modified LCP (type II liquid crystal polymer, MFR (melting point + 12°C): 206.5 g/10 min, thermal decomposition temperature: 513°C, liquid-crystal transition temperature (melting point): 313°C, an amide group and an ester group: present)

Preparation procedure of PBO-modified FEP

First, 0.1 g of 1,3-phenylbisoxazoline (PBO) and 9.9 g of propylene glycol monomethyl ether (PGME) were placed in a 50 cc sample bottle, followed by ultrasonic stirring for 10 minutes. Then, 1 g of FEP was added to the sample bottle.

Next, a stirrer bar was placed in the sample bottle, the contents were reacted in an oil bath at 100°C for 24 hours, and the PGME in the sample bottle was then discharged.

Next, 25 g of methanol was added to the sample bottle, and the sample bottle was shaken to wash the FEP. Thereafter, the sample bottle was left to stand until the FEP settled, and the supernatant was discharged. This washing procedure was carried out five times.

Thereafter, the product remaining in the sample bottle was dried in a dryer at 70°C for three hours to produce PBO-modified FEP.

FT-IR analysis of the obtained PBO-modified FEP showed that a peak derived from carbonyl appeared at or around 1740 $cm^{-1}$ and a C=N peak derived from an oxazoline ring and a peak derived from an amide ester appeared in or around the range of 1680 to 1640 $cm^{-1}$. This result demonstrated the presence of an oxazoline group at an end of the main

chain of the FEP. The oxazoline group is derived from the PBO.

Preparation procedure of Pvozo-modified FEP

First, 0.1 g of poly-2-vinyl-2-oxazoline (Pvozo, Mw: 110,000, Mn: 47,500) and 9.9 g of propylene glycol monomethyl ether (PGME) were placed in a 50 cc sample bottle, followed by ultrasonic stirring for two hours. Then, 1 g of FEP was added thereto.
Next, a stirrer bar was placed in the sample bottle, the contents were reacted in an oil bath at 100°C for 24 hours, and the PGME in the sample bottle was then removed.
Next, 25 g of methanol was added to the sample bottle, and the sample bottle was shaken to wash the FEP. Thereafter, the sample bottle was left to stand until the FEP settled, and the supernatant was removed. This washing procedure was carried out five times.
Thereafter, the product remaining in the sample bottle was dried in a dryer at 70°C for three hours to produce Pvozo-modified FEP.
FT-IR analysis of the obtained Pvozo-modified FEP showed that a peak derived from carbonyl appeared at or around 1740 $cm^{-1}$ and a C=N peak derived from an oxazoline ring and a peak derived from an amide ester appeared in or around the range of 1680 to 1640 $cm^{-1}$. This result demonstrated the presence of an oxazoline group at an end of the main chain of the FEP. The oxazoline group is derived from the Pvozo.

Preparation procedure of Pvozo-modified PFA

First, 0.1 g of poly-2-vinyl-2-oxazoline (Pvozo, Mw: 110,000, Mn: 47,500) and 9.9 g of propylene glycol monomethyl ether (PGME) were placed in a 50 cc sample bottle, followed by ultrasonic stirring for two hours. Then, 1 g of PFA was added thereto.
Next, a stirrer bar was placed in the sample bottle, the contents were reacted in an oil bath at 100°C for 24 hours, and the PGME in the sample bottle was then removed.
Next, 25 g of methanol was added to the sample bottle, and the sample bottle was shaken to wash the PFA. Thereafter, the sample bottle was left to stand until the PFA settled, and the supernatant was removed. This washing procedure was carried out five times.
Thereafter, the product remaining in the sample bottle was dried in a dryer at 70°C for three hours to produce Pvozo-modified PFA.
FT-IR analysis of the obtained Pvozo-modified PFA showed that a peak derived from carbonyl appeared at or around 1740 $cm^{-1}$ and a C=N peak derived from an oxazoline ring and a peak derived from an amide ester appeared in or around the range of 1680 to 1640 $cm^{-1}$. This result demonstrated the presence of an oxazoline group at an end of the main chain of the PFA. The oxazoline group is derived from the Pvozo.

Preparation procedure of Pvozo-modified LCP

First, 0.1 g of poly-2-vinyl-2-oxazoline (Pvozo, Mw: 110,000, Mn: 47,500) and 9.9 g of propylene glycol monomethyl ether (PGME) were placed in a 50 cc sample bottle, followed by ultrasonic stirring for two hours. Then, 1 g of LCP was added thereto.
Next, a stirrer bar was placed in the sample bottle, the contents were reacted in an oil bath at 100°C for 24 hours, and the PGME in the sample bottle was then removed.
Next, 25 g of methanol was added to the sample bottle, and the sample bottle was shaken to wash the LCP. Thereafter, the sample bottle was left to stand until the LCP settled, and the supernatant was removed. This washing procedure was carried out five times.
Thereafter, the product remaining in the sample bottle was dried in a dryer at 70°C for three hours to produce Pvozo-modified LCP.
FT-IR analysis of the obtained Pvozo-modified LCP showed that a peak derived from carbonyl appeared at or around 1740 $cm^{-1}$ and a C=N peak derived from an oxazoline ring and a peak derived from an amide ester appeared in or around the range of 1680 to 1640 $cm^{-1}$. This result demonstrated the presence of an oxazoline group at an end of the main chain of the LCP. The oxazoline group is derived from the Pvozo.

Examples and comparative examples

Under the conditions shown in Table 1, 13.72 g of the resin B (LCP) and 9.03 g of the fluororesin A (FEP) were kneaded using a circulating twin-screw extruder (Xplore MC15HT: Xplore Instruments) for investigation. The materials were dry-blended in advance and then fed from a hopper and kneaded under conditions of 320°C, 5 min, and 500 rpm.

After kneading, samples were taken as strands.

The cross section of each strand was observed with a laser microscope to evaluate the morphology (dispersion state of the resin) after kneading. All the samples formed a sea-island structure in which the resin B defined a sea component and the fluororesin A defined an island component. The dispersed particle size of the island components (fluororesin A) in the examples was smaller than that in the comparative examples, which demonstrated that the dispersed state in the examples was better. Furthermore, the appearance of the strands in the examples was better. Moreover, the results of Example 3 demonstrated that the Pvozo-modified FEP exerted an effect as a resin modifier.

The appearance of the strands was evaluated using the following evaluation criteria.

A: Neither roughness nor agglomeration is observed on the strand surface.
B: Roughness or agglomeration is observed on the strand surface.

[Table 1]

| | Composition (% by volume) | Morphology x50 | Strand appearance |
|---|---|---|---|
| Comparative Example 1 | LCP/FEP (70/30) | 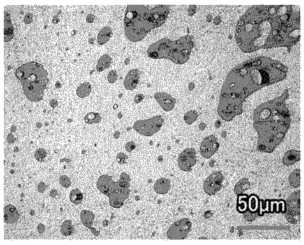  | B |
| Example 1 | LCP/PBO-modified FEP (70/30) | 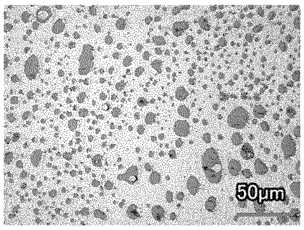  | A |
| Example 2 | LCP/Pvozo-modified FEP (70/30) | 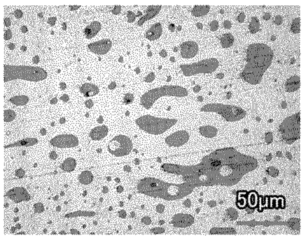  | A |
| Example 3 | LCP/FEP/Pvozo- modified FEP (70/20/10) | 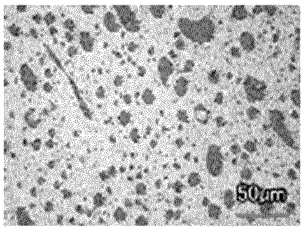  | A |
| Example 4 | LCP/Pvozo-modified PFA (90/10) | 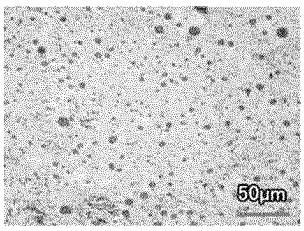  | A |

(continued)

| | Composition (% by volume) | Morphology x50 | Strand appearance |
|---|---|---|---|
| Example 5 | LCP/PFA/Pvozo- modified PFA (70/20/10) | 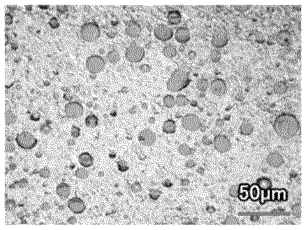 | A |

## Claims

**1.** A composition comprising:

a fluororesin A; and
a resin B other than the fluororesin A, the resin B having a melt flow rate of 30 g/10 min or higher at a melting point + 12°C,
at least one of the fluororesin A or the resin B containing a group (I) represented by the following formula:

[Chem. 1]

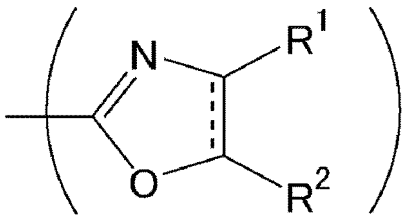

wherein $R^1$ and $R^2$ are the same as or different from each other, are each hydrogen or an organic group, and optionally bond to each other to form a ring structure; and a double line composed of a solid line and a dotted line represents a single bond or a double bond.

**2.** The composition according to claim 1,
wherein at least one of the fluororesin A or the resin B has a thermal decomposition temperature of 330°C or higher.

**3.** The composition according to claim 1 or 2,
wherein the fluororesin A includes at least one selected from the group consisting of polytetrafluoroethylene, a tetrafluoroethylene/perfluoro(alkyl vinyl ether) copolymer, and a tetrafluoroethylene/hexafluoropropylene copolymer.

**4.** The composition according to any one of claims 1 to 3,
wherein the resin B includes at least one selected from the group consisting of a liquid crystal polymer, polyetherimide, polyphenylene sulfide, polyaryl ether ketone, polysulfone, and polyethersulfone.

**5.** The composition according to any one of claims 1 to 4,
wherein the fluororesin A is contained in an amount of 10% by volume or more.

**6.** The composition according to any one of claims 1 to 5,
wherein the group (I) is an oxazoline group.

**7.** The composition according to claim 6,
wherein the oxazoline group is derived from an oxazoline compound.

**8.** A molded article comprising the composition according to any one of claims 1 to 7.

**9.** The molded article according to claim 8, which is intended to be used for a dielectric material.

**10.** A laminate comprising:

metal foil; and
the molded article according to claim 8 or 9.

**11.** The laminate according to claim 10, wherein the metal foil comprises copper.

**12.** A resin comprising a group (I) represented by the following formula and having a thermal decomposition temperature of 330°C or higher:

[Chem. 2]

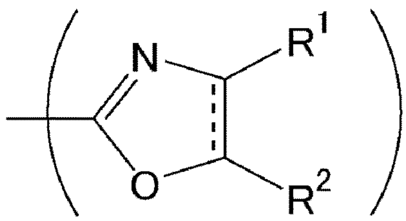

wherein $R^1$ and $R^2$ are the same as or different from each other, are each hydrogen or an organic group, and optionally bond to each other to form a ring structure; and a double line composed of a solid line and a dotted line represents a single bond or a double bond.

**13.** The resin according to claim 12, further comprising an amide group and an ester group.

**14.** The resin according to claim 12 or 13, wherein the group (I) is an oxazoline group.

**15.** The resin according to claim 14, wherein the oxazoline group is derived from an oxazoline compound.

**16.** The resin according to any one of claims 12 to 15, wherein the resin has a melt flow rate of 30 g/10 min or higher at a melting point + 12°C.

**17.** The resin according to claim 16, wherein the resin is a liquid crystal polymer, polyetherimide, polyphenylene sulfide, polyaryl ether ketone, polysulfone, or polyethersulfone.

**18.** The resin according to any one of claims 12 to 15, wherein the resin is a fluororesin.

**19.** The resin according to claim 18, wherein the fluororesin includes at least one selected from the group consisting of polytetrafluoroethylene, a tetrafluoroethylene/perfluoro(alkyl vinyl ether) copolymer, and a tetrafluoroethylene/hexafluoropropylene copolymer.

**20.** The resin according to claim 18 or 19, wherein the fluororesin is insoluble in an aprotic solvent.

**21.** The resin according to claim 20, wherein the aprotic solvent includes at least one selected from the group consisting of a perfluorinated aromatic compound, a perfluorinated trialkylamine, a perfluorinated alkane, a hydrofluorocarbon, a perfluorinated cyclic ether, a hydrofluoroether, and an olefin compound containing at least one chlorine atom.

**22.** The resin according to any one of claims 12 to 21,

wherein the resin is a resin modifier.

**INTERNATIONAL SEARCH REPORT**

International application No.
**PCT/JP2023/035179**

**A. CLASSIFICATION OF SUBJECT MATTER**

***C08L 101/00***(2006.01)i; ***B32B 15/082***(2006.01)i; ***B32B 15/20***(2006.01)i; ***B32B 27/30***(2006.01)i; ***C08L 27/12***(2006.01)i; ***C08L 67/00***(2006.01)i
FI: C08L101/00; C08L27/12; B32B15/082 B; B32B27/30 D; B32B15/20; C08L67/00

According to International Patent Classification (IPC) or to both national classification and IPC

**B. FIELDS SEARCHED**

Minimum documentation searched (classification system followed by classification symbols)

C08L101/00; B32B15/082; B32B15/20; B32B27/30; C08L27/12; C08L67/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2021/039997 A1 (DAIKIN AMERICA, INC.) 04 March 2021 (2021-03-04) claims, paragraph [0043], examples | 1-22 |
| X | WO 2020/226034 A1 (MITSUBISHI ENGINEERING PLASTICS CORP.) 12 November 2020 (2020-11-12) claims, table 4, example 17 | 1-4, 6-9, 12-17, 22 |
| A | WO 2022/044920 A1 (TORAY INDUSTRIES, INC.) 03 March 2022 (2022-03-03) | 1-22 |

☐ Further documents are listed in the continuation of Box C.

☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **13 November 2023** | **28 November 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/035179**

| Patent document cited in search report | Publication date (day/month/year) | Patent family member(s) | Publication date (day/month/year) |
|---|---|---|---|
| WO 2021/039997 A1 | 04 March 2021 | JP 2022-545248 A | |
| | | US 2022/0267582 A1 | |
| | | EP 3986962 A1 | |
| | | KR 10-2022-0025836 A | |
| | | CN 114391030 A | |
| WO 2020/226034 A1 | 12 November 2020 | US 2022/0204757 A1 | |
| | | claims, table 4, example 17 | |
| | | EP 3967724 A1 | |
| | | CN 113906093 A | |
| WO 2022/044920 A1 | 03 March 2022 | EP 4205934 A1 | |
| | | CN 116133817 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2001187833 A
- JP 2018177931 A
- JP 2019065061 A